**Europäisches Patentamt**

**European Patent Office**

**Office européen des brevets**

(19)

(11) Publication number: **0 201 687**
**A2**

# EUROPEAN PATENT APPLICATION

(21) Application number: **86103487.4**

(22) Date of filing: **14.03.86**

(51) Int. Cl.⁴: **H 01 S 3/08**
**H 01 S 3/113, H 01 S 3/101**

(30) Priority: **18.03.85 IT 4782485**

(43) Date of publication of application:
**20.11.86 Bulletin 86/47**

(84) Designated Contracting States:
**AT BE CH DE FR GB LI NL SE**

(71) Applicant: **SELENIA INDUSTRIE ELETTRONICHE**
**ASSOCIATE S.p.A.**
**Via Tiburtina, KM 12.400**
**I-00131 Roma(IT)**

(72) Inventor: **Benedetti Michelangeli, Glauco**
**via dei Frassini 34**
**Ariccia (Roma)(IT)**

(72) Inventor: **Giuliani, Giampiero**
**via Padova 65**
**Roma(IT)**

(72) Inventor: **De Maria, Michele**
**via Carcarigola 138**
**Roma(IT)**

(74) Representative: **Gustorf, Gerhard, Dipl.-Ing.**
**Mühlenstrasse 1**
**D-8300 Landshut(DE)**

(54) **Passive Q-switched power laser resonator.**

(57) Optical resonator for power lasers, consisting of an active means (3), two totally reflecting cavity mirrors (1,6), a phase shifter (2), a polarizer (4) and a passive Q-switch (5). The passive Q-switch is placed between the polarizer (4) and one of the two cavity mirrors, while the active means (3) and the phase shifter (2) are set between the polarizer (4) and the other cavity mirror. The configuration is meant to reduce the losses introduced by the passive Q-switch, and also to reduce the risk of it being damaged by radiation.

FIG.1

PATENTANWALT
DIPL.-ING. GERHARD GUSTORF
EUROPEAN PATENT ATTORNEY

MÜHLENSTRASSE 1
D-8300 LANDSHUT

Telefon Büro: 08 71/2 96 71
Privat: 08 71/2 57 19

0201687

JITLE MODIFIED PA 1 702 EP
see front page
SELENIA Industrie Elettroniche Associate S.p.A.
Via Tiburtina km 12.400
Rome, Italy

---

Optical resonator for power laser using a passive Q-Switch or
any other optical element which has a low damage threshold

---

## Description

This invention regards a power laser optical resonator, using a passive Q switch (in the following referred to as PQS) and/or any low damage optical element and/or with not negligible losses. Such resonator fits the frame of Q switch type power laser resonant cavity optical design.

The Q-Switch is a device which in the form of a short laser pulse provides the energy stored within an active means over a much longer time. A PQS can be obtained by introducing within a laser cavity, a substance which has an absorption peak at the laser emission optical frequency. Such absorption must have a suitable saturation intensity.

The invention proposes to reduce power losses and probability of damage to the optical elements which, vital to laser operation, have a low damage threshold and/or low radiation transmission losses.

**0201687**

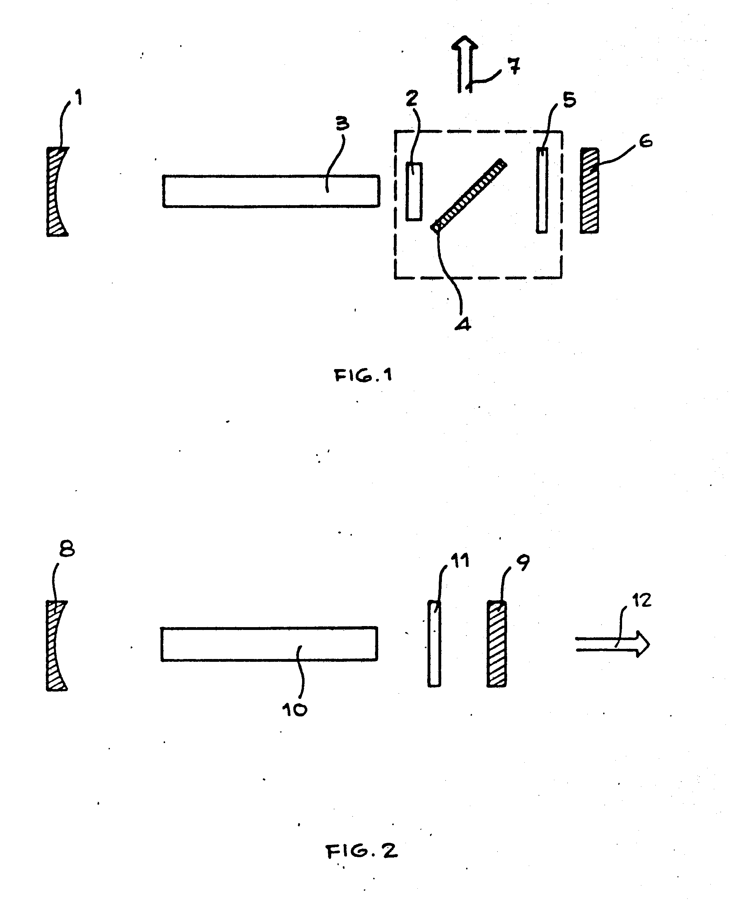

Previous power lasers using a PQS adopted optical configurations of the type shown in Figure 2, where one of the two mirrors 9 was partially reflective so as to let the laser radiation through.

The invention will now be described with reference to one of its developments, presently preferred, as an illustration, but not as a limitation, based upon the Figures attached:

Figure 1 shows the power laser optical resonator, where
1 and 6 are the totally reflecting cavity mirrors,
2 is a phase shifter which modifies the polarisation distribution of the electromagnetic field circulating in the cacity,
3 is an active means having the function of an optical amplifier,
4 is a polarizer which deviates the output radiation,
5 is the PQS adopting a saturable absorber and
7 is the polarizer reflected output laser beam direction.

Figure 2 shows a generic example of a PQS laser resonator, where:
8 and 9 are the mirrors which terminate the cavity and in which:

9 is the semireflecting output mirror,
10 is an active means and
11 is the PQS.

With reference to Figure 1, which shows one of the preferred developments of the invention, the two totally reflecting mirrors 1 and 6, of which one is concave, are of the dielectric layer type.

The phase shifter 2 consists of a $\lambda/4$ crystal quarz lamination with anti reflection coated faces at $\lambda = 1.06$ $\mu$ . The active means 3 consists of a Nd doped YAG rod with anti reflection treated surfaces.

The PQS 5 consists of plastic, doped with an organic saturable absorption dye, glued between two optically treated glass windows, having anti reflection treated surfaces.

The polarizer 4 consists of an optically shaped glass film which has one of its two surfaces (that facing phase shifter 2) treated with polarizing dielectric layers.

Now we shall proceed with the description of the operation of the device object of this invention, with reference again to figure 1.

The polarized light radiation coming from mirror 6 crosses the PQS 5 with a transmission coefficient set by the PQS optical characteristics and thereafter, with negligible losses, it crosses the polarizer 4 striking phase shifter 2.

This light radiation, after crossing phase shifter 2, following amplification by active means 3 reflected by mirror 1 and again amplified by active means 3, crosses phase shifter 2 again with an amplification coefficient which depends on the active means 3 pumping characteristics and on polarization distribution which depends on orientation and optical power of the phase shifter 2.

It appears clear from the description, that in the configuration proposed, radiation intensity seen by PQS can be kept below its damage threshold, independently of the usable output intensity.

By adopting this configuration manufacture of Q-switch power laser becomes possible, with average and high repetition, providing compactness, cost and reliability advantages.

Also, damage probabilities decrease with this configuration, as well as transmission losses, when the elements concerned are positioned between polarizer 4 and totally reflecting mirror 6. In fact luminosity in this part of the optical resonator may be much lower than that at the output.

0201687

## Claims

1. Optical resonator for power lasers, using a passive Q switch, or any other optical element with low damage threshold and/or non negligible losses, characterized by the fact that the active means (3) and the phase shifter (2) are placed between the polarizer (4) and one of the two mirrors (1,6) terminating the cavity, the passive Q-switch being placed between said polarizer (4) and the other one of said two mirrors.

2. Optical resonator as claimed in claim 1, wherein the passive Q-switch is set by the side of or replaced by another low damage threshold optical element and/or having other transmission losses.

0201687

FIG.1

FIG.2